(19) Europäisches Patentamt
European Patent Office
Office européen des brevets

(11) EP 2 695 670 B1

(12) **EUROPEAN PATENT SPECIFICATION**

(45) Date of publication and mention of the grant of the patent:
**29.04.2020 Bulletin 2020/18**

(21) Application number: **12768506.3**

(22) Date of filing: **28.03.2012**

(51) Int Cl.:
***B01D 71/56** (2006.01)* ***B01D 69/10** (2006.01)*
***B01D 69/12** (2006.01)*

(86) International application number:
**PCT/JP2012/058049**

(87) International publication number:
**WO 2012/137635 (11.10.2012 Gazette 2012/41)**

(54) **COMPOSITE SEMIPERMEABLE MEMBRANE, COMPOSITE SEMIPERMEABLE MEMBRANE ELEMENT, AND METHOD FOR MANUFACTURING COMPOSITE SEMIPERMEABLE MEMBRANE**

SEMIPERMEABLE VERBUNDMEMBRAN, SEMIPERMEABLES VERBUNDMEMBRANENELEMENT UND VERFAHREN ZUR HERSTELLUNG DER SEMIPERMEABLEN VERBUNDMEMBRAN

MEMBRANE SEMI-PERMÉABLE COMPOSITE, ÉLÉMENT DE MEMBRANE SEMI-PERMÉABLE COMPOSITE ET PROCÉDÉ DE FABRICATION D'UNE MEMBRANE SEMI-PERMÉABLE COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2011 JP 2011081618**

(43) Date of publication of application:
**12.02.2014 Bulletin 2014/07**

(73) Proprietor: **Toray Industries, Inc.**
**Tokyo 103-8666 (JP)**

(72) Inventors:
- **NAKATSUJI, Koji**
  **Otsu-shi, Shiga 520-8558 (JP)**
- **KIMURA, Masahiro**
  **Otsu-shi Shiga 520-8558 (JP)**
- **SASAKI, Takao**
  **Otsu-shi, Shiga 520-8558 (JP)**
- **OGAWA, Takafumi**
  **Otsu-shi, Shiga 520-8558 (JP)**

(74) Representative: **Hoefer & Partner Patentanwälte mbB**
**Pilgersheimer Straße 20**
**81543 München (DE)**

(56) References cited:
**EP-A1- 1 775 016**
**EP-A1- 1 808 220**
**WO-A1-02/11868**
**GB-A- 2 064 367**
**JP-A- 5 111 625**
**JP-A- 2000 176 263**
**JP-A- 2006 130 497**
**JP-A- 2008 253 906**
**JP-A- 2009 262 089**
**JP-A- 2010 099 549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 695 670 B1

## Description

### TECHNICAL FIELD

The present invention relates to a composite semipermeable membrane useful in selective separation of a liquid mixture. The composite semipermeable membrane of the present invention can be suitably used in desalination, for example, of sea water or brackish water.

### BACKGROUND ART

Regarding separation of a mixture, there are various techniques for removing substances (for example, salts) dissolved in a solvent (for example, water), and the use of a membrane separation process as a process for energy saving and resource saving has recently been expanding. Examples of membranes used in the membrane separation process include microfiltration membrane, ultrafiltration membrane, nanofiltration membrane, and reverse osmosis membrane. These membranes are used in the case of obtaining cases drinking water from, for example, sea water, brakish water, or water containing hazardous substance, and in production of industrial ultrapure water, effluent treatment, or recovery of valuables.

Most of the reverse osmosis membranes and nanofiltration membranes that are currently commercial available are composite semipermeable membranes. Two types of the composite semipermeable membranes are available: one having, on a porous support membrane, a gel layer and an active layer in which polymers are cross-linked; and the other having, on a porous support membrane, an active layer obtained by polycondensating monomers. Above all, a composite semipermeable membrane obtained by coating a porous support membrane with a separating functional layer composed of cross-linked polyamide obtained by polycondensation reaction of polyfunctional amines with polyfunctional acid halides has been widely used as a separation membrane having high permeability and selective separation properties.

In reverse osmosis membranes used in water generation plants, higher water permeation performance is demanded in order to further reduce running costs. For such a demand, known is a method comprising bringing a composite semipermeable membrane provided with cross-linked polyamide polymer as a separation active layer into contact it with an aqueous solution containing nitrous acid (Patent Document 1). This treatment can improve the water permeation performance of the composite semipermeable membrane while maintaining a boron removal rate before the treatment. Yet higher water permeation performance has been demanded.

Further, examples of factors that affect the water permeability of composite semipermeable membranes include the protuberance structure of the separation active layer. It is suggested that enlarging protuberances increases substantial membrane area and water permeability (Patent Document 2). Addition of various additives at the time of interfacial polycondensation enlarges the protuberances and improves the water permeability, but there is a concern about decrease in a removal rate.

Further, when the composite semipermeable membrane is kept being used, the membrane surface becomes polluted with hours of use, and the amount of water generated by the membrane decreases. That's why chemical washing with acids, alkalis, or the like is required after operation for a certain period of time. Hence, in order to continue stable operation over a long period of time, it has been desired to develop a composite semipermeable membrane whose membrane performance changes to a small extent before and after washing with acids, alkalis, or the like.

In order to increase the alkaline resistance of the composite semipermeable membrane, a method comprising bringing a composite semipermeable membrane into contact with an aqueous solution with a concentration of hydrogen ions of pH 9 to 13 is disclosed (Patent Document 3). Further, in order to increase the acid resistance of the composite semipermeable membrane, a method comprising bringing a composite semipermeable membrane into contact with cyclic organosulfate is disclosed (Patent Document 4). EP1808220, JP2000176263, GB2064367 disclose composite polyamide membranes formed by interfacial polymerization with different support structures. EP1775016 describes a method of cocasting multilayered ultrafiltration membranes.

### PRIOR ART REFERENCES

### PATENT DOCUMENTS

Patent Document 1: Japanese Patent Application Laid-Open Publication No. 2007-090192
Patent Document 2: Japanese Patent Application Laid-Open Publication No. 9-19630
Patent Document 3: Japanese Patent Application Laid-Open Publication No. 2006-102624
Patent Document 4: Japanese Patent Application Laid-Open Publication No. 2010-234284

SUMMARY OF THE INVENTION

PROBLEMS TO BE SOLVED BY THE INVENTION

An object of the present invention is to provide a high-performing composite semipermeable membrane that has high water permeation performance and high chemical resistance.

MEANS FOR SOLVING THE PROBLEMS

The present invention for achieving the above object is defined in the claims 1-3.

EFFECT OF THE INVENTION

By the present invention, a high-performing composite semipermeable membrane that has high water permeability and high chemical resistance and whose membrane performance changes to a small extent before and after washing with a chemical solution can be obtained; and continuation of stable operation is expected over a long period of time by using this membrane.

MODE FOR CARRYING OUT THE INVENTION

The present invention is a composite semipermeable membrane in which a polyamide separation functional layer is formed on a porous support membrane comprising a substrate and a porous support, wherein the standard deviation of the membrane thickness of the separation functional layer is 2.00 nm or less.

In accordance with the composite semipermeable membrane of the present invention, it is the separation functional layer that substantially has separation performance of ions or the like. The porous support membrane comprises the substrate and porous support, does not substantially have the separation performance and imparts strength to the separation functional layer.

The thickness of the porous support membrane affects the strength of the composite semipermeable membrane and the packing density when the composite semipermeable membrane is made to an element. In order to obtain sufficient mechanical strength and packing density, the thickness of the porous support membrane is preferably in a range of 30 μm or more and 300 μm or less, more preferably in a range of 50 μm or more and 300 μm or less, more preferably in a range of 50 μm or more and 250 μm or less, and still more preferably in a range of 100 μm or more and 250 μm or less. Further, the thickness of the porous support is preferably in a range of 10 μm or more and 200 μm or less, more preferably in a range of 20 μm or more and 100 jim or less, and still more preferably in a range of 30 μm or more and 100 μm or less. The thickness of the substrate is preferably in a range of 10 to 250 μm, and more preferably in a range of 20 to 200 μm.

Note that, in the present invention, the thickness of each of the layers and membranes means an average value unless otherwise stated. The average value here indicates an arithmetic average value. That is, the thickness of each of the layers and membranes is determined by calculating an average value of the thickness at 20 points, wherein the thickness is measured at 20 μm intervals in a direction perpendicular to the thickness direction (the membrane plane direction) in cross-section observation.

Examples of substrates composing the porous support membrane include polyester-based polymers, polyamide-based polymers, polyolefin-based polymers, and mixtures and copolymers thereof. Because a porous support membrane that is excellent in durability such as mechanical strength, thermal resistance, water resistance or chemical resistance can be obtained, polyester-based polymers are preferred.

The polyester-based polymer used in the present invention is polyester obtained by polycondensation of an acid component and alcohol component. As the acid component, aromatic carboxylic acid such as terephthalic acid, isophthalic acid or phthalic acid; aliphatic dicarboxylic acid such as adipic acid or sebacic acid; alicyclic dicarboxylic acid such as cyclohexanecarboxylic acid; or the like can be used. Further, as the alcohol component, ethylene glycol, diethylene glycol, polyethylene glycol, or the like can be used.

Examples of the polyester-based polymer include polyethylene terephthalate resin, polybutylene terephthalate resin, polytrimethylene terephthalate resin, polyethylene naphthalate resin, polylactic resin and poly butylene succinate resin. Further, examples thereof include copolymers of these resins.

As such a substrate, a substrate comprising fibers is used in view of the strength, uneven forming ability and fluid permeability. As the substrate, a filament non-woven fabric or staple fiber non-woven fabric can be preferably used. In particular, the filament non-woven fabric is excellent permeability when a polymer solution is cast into the substrate and can therefore prevent the peeling-off of the porous support layer. Further, the filament non-woven fabric can prevent ununiform formation of the membrane due to fluffing of the substrate or the like and occurrence of defects such as

pinholes and is thus preferred. Furthermore, because a tension is applied in the membrane-forming direction when continuous membrane production of the composite semipermeable membrane is carried out, it is preferred to use the filament non-woven fabric which is more excellent in dimension stability as the substrate.

In a filament non-woven fabric, in view of formability and strength, fibers in the surface layer arranged on the opposite side to the porous support layer is preferably more longitudinally oriented than fibers in the surface layer arranged on the porous support layer side. Such a structure is preferred because the structure allows maintenance of the strength and thus high effects of preventing membrane breakage or the like are attained. On the top of that, at the time of imparting unevenness to the composite semipermeable membrane, the formability of a layered product containing the porous support layer and substrate increases and the uneven configuration of the surface of a composite semipermeable membrane is stabilized. To be more specific, in the filament non-woven fabric, degree of fiber orientation of the surface layer arranged on the opposite side to the porous support layer is preferably 0° to 25°. Further, the difference in the degree of orientation from the degree of fiber orientation in the surface layer arranged on the porous support layer side is preferably 10° to 90°.

In the process for producing the composite semipermeable membrane and the process for producing the element, a heating step is involved and a phenomenon where the heating shrinks the porous support layer or the composite semipermeable membrane occurs. In particular, the shrinking is noticeable in the width direction in which the tension is not applied during the continuous membrane production. The shrinking causes a problem, for example, with the dimension stability, and therefore the substrate is desirably one that has a low rate of thermal dimensional change. In a non-woven fabric, the difference between the degree of fiber orientation in the surface layer arranged on the opposite side to the porous support layer and the degree of fiber orientation in the surface layer arranged on the porous support side layer is preferably 10° to 90° because thermal change in the width direction can be prevented.

The degree of fiber orientation herein is an index indicating the direction of the fibers of the non-woven fabric substrate composing the porous support layer and refers to the average angle of the fibers composing the non-woven fabric substrate determined when the membrane-forming direction, that is, the longitudinal direction of the non-woven fabric substrate and the direction perpendicular to the film-forming direction, that is, the width direction of the non-woven fabric substrate during continuous membrane production is assumed to be 0° and 90°, respectively. Thus, it is shown that the closer the degree of fiber orientation is to 0°, the more longitudinal the orientation is; and the closer the degree of fiber orientation is to 90°, the more transverse the orientation is.

Ten small pieces of sample were randomly collected from a non-woven fabric, and photographs of the surface of the sample were taken at a magnification of 100-fold to 1,000-fold with a scanning electron microscope. For 10 fibers from each of the samples, 100 fibers in total, the angle was measured taking the longitudinal direction (lengthwise direction) of the non-woven fabric as 0° and the width direction (transverse direction) of the non-woven fabric as 90°, and the average value thereof was rounded to the whole number to determine the degree of fiber orientation.

As a material of a porous support composing the porous support membrane, polysulfone is highly stable chemically, mechanically and thermally and is easy to be molded; and therefore is used.

To be specific, it is preferred to use polysulfone comprising the repeating unit shown in the following chemical formula because of the easiness of controlling the pore size and the high dimension stability.

[Chemical Formula 1]

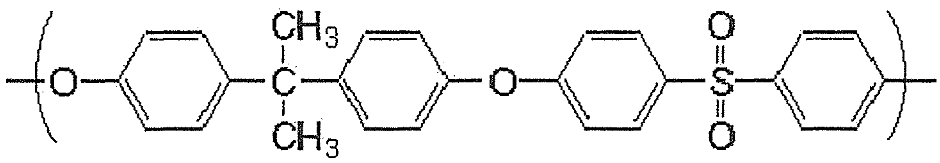

For example, a solution of the above polysulfone in N,N-dimethylformamide (hereinafter referred to as DMF) is applied on a substrate to a uniform thickness, and the resultant is subjected to wet solidification in water, whereby a porous support membrane having micropores with a diameter of a several to 30 nm at most of the surface can be obtained. Using a densely-woven polyester textile or polyester non-woven fabric as a substrate, a polysulfone solution is applied on such a substrate to a uniform thickness, and the resultant is subjected to wet solidification in water, whereby a porous support membrane having micropores with a diameter of several tens of nm at most of the surface can be obtained.

The separation functional layer in the present invention contains polyamide as a major component. Polyamide composing the separation functional layer can be formed by carrying out interfacial polycondensation of polyfunctional amine and polyfunctional acid halide on the porous support membrane. Here, it is preferred that at least either of the polyfunctional amine or polyfunctional acid halide contain a trifunctional or higher polyfunctional amine or polyfunctional acid halide.

Note that, in the present invention, containing polyamide as a major component means that polyamide accounts for 60% by weight or more in the separation functional layer, preferably 80% by weight or more, more preferably 90% by weight or more and encompasses constitution in which the separation functional layer contains only polyamide.

Polyfunctional amine herein refers to an amine having at least two primary and/or secondary amino groups in one molecule, at least one of the amino groups being a primary amino group. Examples of the polyfunctional amine include aromatic polyfunctional amines such as phenylenediamine or xylylenediamine, in which two amino groups are attached to a benzene ring in any of ortho, meta, and para positional relationship, 1,3,5-triaminobenzene, 1,2,4-triaminobenzene, 3,5-diaminobenzoic acid, 3-aminobenzylamine, or 4-aminobenzylamine; aliphatic amines such as ethylenediamine or propylenediamine; and alicyclic polyfunctional amines such as 1,2-diaminocyclohexane, 1,4-diaminocyclohexane, 4-aminopiperidine, or 4-aminoethylpiperazine. Of these, an aromatic polyfunctional amine having 2 to 4 primary amino groups and/or secondary amino groups in one molecule is preferred in view of the selective separation properties, water permeability, and thermal resistance of the membrane. As such a polyfunctional aromatic amine, a polyfunctional amine selected from m-phenylenediamine, p-phenylenediamine, and 1,3,5-triaminobenzene are suitably used. Among them, it is more preferred to use m-phenylenediamine (hereinafter referred to as m-PDA) for reasons of availability and ease of handling. These polyfunctional amines may be used solely, or two or more of them may be used at the same time. In cases where two or more of them are used at the same time, the above amines may be combined, or the above amine may be combined with an amine having at least two secondary amino groups in one molecule. Examples of the amine having at least two secondary amino groups in one molecule include piperazine and 1,3-bis(piperidyl)propane.

Polyfunctional acid halide refers to an acid halide having at least two halogenated carbonyl groups in one molecule. Examples of trifunctional acid halides include trimesoyl chloride, 1,3,5-cyclohexanetricarboxylic acid trichloride, and 1,2,4-cyclobutanetricarboxylic acid trichloride. Examples of bifunctional acid halides include aromatic bifunctional acid halides such as biphenyldicarboxylic acid dichloride, azobenzenedicarboxylic acid dichloride, terephthalic acid chloride, isophthalic acid chloride, or naphthalene dicarboxylic acid chloride; aliphatic bifunctional acid halides such as adipoyl chloride or sebacoyl chloride; and alicyclic bifunctional acid halides such as cyclopentane dicarboxylic acid dichloride, cyclohexanedicarboxylic acid dichloride, or tetrahydrofuran dicarboxylic acid dichloride. In view of reactivity with polyfunctional amines, polyfunctional acid halides are preferably polyfunctional acid chlorides, and in view of the selective separation properties and thermal resistance of the membrane, polyfunctional acid chlorides are preferably polyfunctional aromatic acid chlorides having 2 to 4 carbonyl chloride groups in one molecule. Of these, trimesoyl chloride is more preferably used from the viewpoint of availability and ease of handling. These polyfunctional acid halides may be used solely, or two or more of them may be used at the same time.

And the present invention is characterized in that the standard deviation of the membrane thickness of a polyamide separation functional layer is 2.00 nm or less.

The membrane thickness of a polyamide separation functional layer can be analyzed using an observation technique with a transmission electron microscope, TEM tomography, focused ion beam/scanning electron microscope (FIB/SEM), or the like. For example, in cases where the observation is carried out with TEM tomography, a composite semipermeable membrane is treated with water-soluble polymer to retain a form of the polyamide separation functional layer and then is stained with osmium tetroxide or the like for carrying out the observation. The polyamide separation functional layer in the present invention forms a protuberance structure. The shortest distance from a certain point on the external surface of such a protuberance structure to the interior surface is defined as membrane thickness. The standard deviation of the membrane thickness and average membrane thickness of the polyamide separation functional layer are calculated from measurement values of at least 50 sites.

With the standard deviation of the membrane thickness of the polyamide separation functional layer being 2.00 nm or less, high chemical resistance is imparted. If the standard deviation of the membrane thickness of the polyamide separation functional layer is more than 2.00 nm, portions with thinner membrane thickness locally deteriorates at the time of washing with a chemical solution, which readily causes decrease in membrane performance. With the polyamide separation functional layer being uniform and having a standard deviation of the membrane thickness of 2.00 nm or less, local deterioration can be prevented and stable operation is feasible over a long period of time.

Further, the average membrane thickness of a polyamide separation functional layer is 14 nm or more and 22 nm or less and more preferably 16 nm or more and 20 nm or less. If the average membrane thickness is less than 14 nm, sufficient permeate flux is attained but deterioration at the time of washing with a chemical solution is easy to occur. If the average membrane thickness is more than 22 nm, deterioration at the time of washing with a chemical solution can be prevented but sufficient permeate flux is not attained. If the average membrane thickness is 14 nm or more and 22 nm or less, there is balance between the permeate flux and durability against washing with a chemical solution to provide a high-performing membrane.

In the present invention, in order to make the standard deviation of the membrane thickness polyamide separation functional layer be 2.00 nm or less, it is preferred to use a porous support having a multilayered structure. The porous support having a multilayered structure has at least two layers of a first layer that contacts with a substrate and

a second layer that contacts with the polyamide separation functional layer. The first layer has fine pores of a pore size of 0.1 μm or more and 1 μm or less in order to reduce permeation resistance of water and to impart a good protuberance structure to the polyamide separation functional layer. The second layer has fine pores of a pore size of 1 nm or more and 10 nm or less in order to retain an amount of polyfunctional amine necessary to form the polyamide separation functional layer and to uniformly release polyfunctional amine in interfacial polycondensation forming the polyamide separation functional layer. The inventors found out that a polyamide separation functional layer that has extremely uniform membrane thickness and small standard deviation of membrane thickness is formed by, as described above, forming the polyamide separation functional layer on such a porous support having the multilayered structure through interfacial polycondensation. Note that the above-mentioned first layer and second layer are not necessarily clearly separated and the interfacial surface between the first layer and second layer may be fused. An area of the first layer with which the substrate makes contact and an area of the second layer with which the polyamide separation functional layer makes contact need only to have fine pores having the above pore size.

As described later, interfacial polycondensation is carried out by bringing a porous support retaining a polyfunctional amine aqueous solution into contact with a polyfunctional acid halide organic solvent solution. That is, the polyfunctional amine aqueous solution is released from the porous support and thereby reacted with the polyfunctional acid halide to form the polyamide separation functional layer. It is thought that, by the porous support having the above-mentioned multilayered structure, the polyfunctional amine aqueous solution released from the porous support has a uniform and appropriate flow rate, thereby obtaining a polyamide separation functional layer that has uniform membrane thickness and imparts a good protuberance structure.

The form of the porous support membrane can be observed with a scanning electron microscope, transmission electron microscope, or atomic force microscope. For example, in cases where the observation is carried out with a scanning electron microscope, the porous support is peeled off from a substrate, and this is then cut by freeze fracture technique to prepare a sample for cross-sectional observation. This sample is thinly coated with platinum, platinum-palladium, or ruthenium tetrachloride, preferably with ruthenium tetrachloride, and observed with an ultra-high resolution field-emission scanning electron microscope (UHR-FE-SEM) at an accelerating voltage of 3 to 6 kV. As an ultra-high resolution field-emission scanning electron microscope, S-900-type electron microscope manufactured by Hitachi Ltd. or the like can be used. The membrane thickness and pore size of the porous support membrane are determined from the obtained electron micrograph. Here, the thickness and pore size in the present invention refer to the average values.

Next, a method of producing the composite semipermeable membrane of the present invention will be described. A porous support membrane composing the composite semipermeable membrane of the present invention is formed by applying, onto a substrate, a polymer solution for forming a porous support, followed by solidification.

In order to obtain, as the porous support as described above, a porous support having a first layer that is excellent in a permeate flow rate after membrane production, and a second layer that retains an amount of polyfunctional amine necessary to form a polyamide separation functional layer having microscopic fine pores for uniformly release the polyfunctional amine, it is preferred that the polymer solution A for forming the a first layer and the polymer solution B for forming the second layer have different composition.

The concentration of polysulfone in the polymer solution A is 12% by weight or more, and more preferably 13% by weight or more. Further, the concentration of polysulfone in the polymer solution A is 18% by weight or less, and more preferably 15% by weight or less. With the polymer concentration being 12% by weight or more, relatively small continuous holes are formed and therefore a pore size that is preferred as the first layer is readily obtained. Further, with the polymer concentration being 18% by weight or less, phase separation sufficiently proceeds before solidification of the polymer, thereby readily obtaining a porous structure.

The concentration of polysulfone in the polymer solution B is preferably 14% by weight or more, more preferably 15% by weight or more, more preferably 15.5% by weight or more, and still more preferably 16% by weight or more. Further, the concentration of polysulfone in the polymer solution B is preferably 25% by weight or less, and more preferably 18% by weight or less. With the concentration of polysulfone in the polymer solution B being less than 14% by weight, surface fine pores tend to be large, which makes it difficult to uniformly supply an amine solution when a polyamide separation functional layer is formed. Further, with the concentration of polysulfone in the polymer solution B being more than 25% by weight, surface fine pores tend to be small, which makes it difficult to supply an adequate amount of amine solution when the polyamide separation functional layer is formed.

Further, in order to obtain the porous support having the preferred multilayered structure as described above, the polymer concentration of the polymer solution B is larger than the polymer concentration of the polymer solution A.

With regard to the temperature of the polymer solution at the time of applying the polymer solution, in cases where polysulfone is used, a solution that is in a range of 10°C or more and 60°C or less may be applied. The temperature of the polymer solution is more preferably in a range of 20°C or more and 35°C or less. With the temperature of the polymer solution being less than 10°C, polymers are solidified before the phase separation between the polymer and solvent sufficiently proceeds, which makes it difficult to obtain the porous structure. Further, with the temperature of the polymer solution being more than 60°C, the phase separation excessively proceeds and continuous holes tend to be

large, which makes it difficult to obtain a predetermined pore size.

In formation of a porous support membrane, it is preferred that the polymer solution A forming a first layer be applied on a substrate at the same time as when the polymer solution B forming a second layer be applied on the first layer. When the polymer solution A is applied and hardened and thereafter the polymer solution B is applied thereon, a highly dense skin layer is formed on the surface of the first layer formed by phase separation of the polymer solution A and the permeate flow rate of the first layer considerably decreases, which is not preferred. It is thus important that the polymer solution B is applied at the same time to the extent that the polymer solution A does not form the highly dense skin layer by the phase separation. The phrase "applying at the same time" herein encompasses a state where the polymer solution A is in contact with the polymer solution B before reaching the substrate, that is, a state where when the polymer solution A is applied on the substrate, the polymer solution B is already applied on the polymer solution A.

The application of the polymer solution on the substrate can be carried out by various coating methods. Pre-measurement coating methods capable of the accurate amount of coating solution such as die coating, slide coating, or curtain coating are preferably employed. Further, in formation of a porous support having a multilayered structure, a double-slit die method comprising applying the polymer solution A forming a first layer and polymer solution B forming a second layer at the same time using a double-slit die coater is more preferably used.

Note that resins containing the polymer solution A and polymer solution B may be the same resins or may be mutually different resins. By selecting the resin as appropriate, various characteristics such as strength characteristics, permeation characteristics or surface characteristics of a porous support membrane to be produced can be more widely adjusted.

Note that solvents containing the polymer solution A and polymer solution B may be the same solvents or may be different solvents, as long as they are good solvents of the polymer. With consideration for strength characteristics of a porous support membrane to be produced and impregnation of the polymer solution into a substrate, the solvent can be selected as appropriate.

The good solvent herein refers to one that dissolves a macromolecular material. Examples of the good solvent include N-methyl-2-pyrrolidone, tetrahydrofuran, dimethyl sulfoxide, tetramethyl urea; amides such as dimethylacetamide or dimethylformamide; lower alkyl ketones such as acetone, or methyl ethyl ketone; esters and lactones such as trimethyl phosphate or γ-butyrolactone; and mixed solvents thereof.

Further, the above polymer solution may contain additives for adjusting the pore size, porosity, hydrophilicity, elastic modulus, or the like of a porous support membrane to be obtained. Examples of additives for adjusting the pore size and porosity include, but not limited to, water, alcohols, water-soluble polymers such as polyethylene glycol, polyvinylpyrrolidone, polyvinyl alcohol, or polyacrylic acid or a salt thereof, inorganic salts such as lithium chloride, sodium chloride, calcium chloride, or lithium nitrate, formaldehyde, and formamide. Examples of additives for adjusting hydrophilicity and elastic modulus include various surfactants.

Subsequently, the substrate applied with the polymer solution is immersed in liquid that is a nonsolvent for such a polymer and has miscibility to the solvent and additive; and the polymer solution is thereby solidified to form a porous support.

Examples of the nonsolvent include water; aliphatic hydrocarbons such as hexane, pentane, or trichloroethylene; aromatic hydrocarbons such as benzene or toluene; aliphatic alcohols such as methanol, ethanol, ethylene glycol, diethylene glycol, triethylene glycol, propylene glycol, butylene glycol, pentanediol, hexanediol, or low molecular weight polyethylene glycol; and mixed solvents thereof.

In cases where polysulfone is used as a polymer, water is preferably used as a nonsolvent by ordinary. Yet, the nonsolvent is not particularly restricted as long as it does not dissolve polysulfone. The membrane morphology of a porous support membrane to be obtained varies in the composition of a polymer solution, and thereby the membrane forming properties of a composite semipermeable membrane varies. Further, the temperature of a solidification bath is preferably -20°C to 100°C. It is more preferred to be 10 to 30°C. With the temperature of the solidification bath being higher than this range, vibration of the surface of solidification bath grows in intensity due to thermal motion and the smoothness of the membrane surface after membrane formation is easy to decrease. In contrast, if the temperature is too low, a solidification rate is low, causing problems in membrane-forming properties.

Next, the obtained porous support membrane is washed with hot water in order to remove a membrane-forming solvent remaining in the membrane. The temperature of the hot water at this time is preferably 50 to 100°C and more preferably 60 to 95°C. If the temperature of the hot water is higher than this range, the degree of the shrinkage of the porous support membrane is high and the water permeability decreases. In contrast, if the temperature of the hot water is low, the washing effects are low.

Subsequently, a process of forming a polyamide separation functional layer composing a composite semipermeable membrane will be described. The polyamide separation functional layer can be formed by carrying out interfacial polycondensation on the surface of the porous support membrane using the previously-mentioned aqueous solution containing polyfunctional amine and organic solvent solution containing a polyfunctional acid halide and exhibiting immiscibility with water.

The concentration of polyfunctional amine in a polyfunctional amine aqueous solution is preferably in a range of 0.1% by weight or more and 20% by weight or less, and more preferably in a range of 0.5% by weight or more and 15% by weight or less. With the concentration of polyfunctional amine being in this range, a membrane to be obtained can have sufficient water permeability and excellent salt and boron removal performance. In the polyfunctional amine aqueous solution, surfactants, organic solvents, alkaline compounds, antioxidants, or the like may be included as long as they do not interfere with a reaction between the polyfunctional amine and polyfunctional acid halide. The surfactant has effects of improving the wettability on the surface of the porous support membrane and reducing the interfacial tension between the aqueous amine solution and organic solvent. The organic solvent can serve as a catalyst for an interfacial polycondensation reaction, and the addition thereof, in some cases, allows the interfacial polycondensation reaction to be carried out in an efficient fashion.

The concentration of polyfunctional acid halide in an organic solvent solution is preferably in a range of 0.01% by weight or more and 10% by weight or less, and more preferably in a range of 0.02% by weight or more and 2.0% by weight or less. With the concentration being 0.01% by weight or more, a sufficient reaction rate can be attained. With the concentration being 10% by weight or less, occurrence of side reactions can be prevented. Further, it is more preferred to contain an acylation catalyst such as DMF in this organic solvent solution because the interfacial polycondensation is promoted.

The organic solvent is desirably one that dissolves polyfunctional acid halides, does not break the porous support membrane, and is inactive against polyfunctional amine compounds and polyfunctional acid halides. Preferred examples thereof include hydrocarbon compounds such as hexane, heptane, octane, nonane, or decane.

To carry out interfacial polycondensation on a porous support membrane, the polyfunctional amine aqueous solution is first brought into contact with the porous support membrane. The contact is preferably carried out uniformly and continuously on the surface of the porous support membrane. To be specific, examples of methods include a method comprising coating the porous support membrane with the polyfunctional amine aqueous solution and a method comprising immersing the porous support membrane in the polyfunctional amine aqueous solution. The contact time between the porous support membrane and the polyfunctional amine aqueous solution is preferably in a range of 5 seconds or more and 10 minutes or less, and more preferably in a range of 10 seconds or more and 3 minutes or less.

After the aqueous polyfunctional amine solution has been contacted with the porous support membrane, the solution is sufficiently drained such that droplets do not remain on the membrane. Sufficient draining prevents deterioration in the removal performance of the composite semipermeable membrane due to defects resulting from portions where the droplets remained after formation of the composite semipermeable membrane. As a method of draining, a method comprising holding vertically the porous support membrane after contacted with the polyfunctional amine aqueous solution to allow excess aqueous solution to naturally fall, a method comprising blowing with airflow such as nitrogen from an air nozzle to compulsorily drain the solution, or the like, which are described in Japanese Patent Application Laid-Open Publication No. H02-78428, can be used. Further, after the draining, the membrane surface can also be dried to partially remove the water of the aqueous solution.

Next, the porous support membrane after contacted with the polyfunctional amine aqueous solution is brought into contact with an organic solvent solution containing polyfunctional acid halides to form a polyamide separation functional layer by interfacial polycondensation. A method of bringing an organic solvent solution containing polyfunctional acid halides into contact with a porous support membrane need only to be carried out in the same manner as a method of coating a polyfunctional amine aqueous solution onto a porous support membrane.

It is crucial that, in the step of interfacial polycondensation, a polyamide separation functional layer sufficiently covers over a porous support membrane; and, during the step of interfacial polycondensation, an organic solvent solution containing polyfunctional acid halides that has been contacted remains on the porous support membrane. Because of this, the amount of time for carrying out the interfacial polycondensation is preferably 0.1 seconds or more and 3 minutes or less, and more preferably 0.1 seconds or more and 1 minute or less. By setting the amount of time for carrying out the interfacial polycondensation to 0.1 seconds or more and 3 minutes or less, the polyamide separation functional layer can sufficiently cover over porous support membrane; and the organic solvent solution containing polyfunctional acid halides that has been can remain on the porous support membrane.

After a polyamide separation functional layer is formed on a porous support membrane by interfacial polycondensation, excess solvents are drained. As a method of draining the solvent, a method comprising holding vertically the membrane to allow excess organic solvents to naturally fall and remove the solvents can be used. In this case, the amount of time for vertically holding the membrane is preferably 1 minute or more and 5 minutes or less, and more preferably 1 minute or more and 3 minutes or less. If the time is too short, a separating functional layer is not completely formed, whereas if the time is too long, the organic solvent is excessively dried and defective portions are generated in the polyamide separation functional layer, leading to decreased performance of membrane to be obtained.

The thus produced composite semipermeable membrane of the present invention is wound, together with a feed spacer such as a plastic net, a permeate spacer such as a tricot, and, if necessary, a film for enhancing pressure resistance, around a cylindrical collecting pipe provided with a large number of pores by drilling and suitably used as a

spiral composite semipermeable membrane element. Further, this element can be connected in series or in parallel and housed in a pressure container to provide a composite semipermeable membrane module.

Further, the above composite semipermeable membrane, and the element and module thereof can be combined with a pump for supplying feed water thereto and with an apparatus for pretreating the feed water to constitute a fluid separation apparatus. By using this separation apparatus, feed water can be separated into permeate water such as drinking water and concentrated water that has not permeated through the membrane to obtain water for the intended purpose.

The higher the operating pressure of the fluid separation apparatus, the more improved salt removal rate is but the more the energy necessary for operation increases. Considering the durability of the composite semipermeable membrane, the operating pressure during passing the water to be treated through the composite semipermeable membrane is preferably 0.5 MPa or more and 10 MPa or less. The temperature of feed water is preferably 5°C or more and 45°C or less, because the higher the temperature is, the more the salt removal rate decreases, but the lower it is, the more the membrane permeate flux decreases as well. Further, when the pH of feed water is high, in the case of feed water of a high salt concentration such as sea water, scale of magnesium or the like might occur, and there is a concern about membrane deterioration due to the high pH operation. Thus, the operation in the neutral range is preferred.

Examples of feed water treated with the composite semipermeable membrane according to the present invention include sea water, brackish water, and liquid mixtures containing TDS (Total Dissolved Solids) of 500 mg/L or more and 100 g/L or less, such as effluent. In general, TDS refers to total dissolved solid content and is expressed as "mass/volume" or "weight ratio" on the supposition that 1 L is equal to 1 kg. By definition, it can be calculated from the weight of residue obtained by evaporating the solution filtered through a 0.45 μm filter at a temperature of 39.5°C or more and 40.5°C or less, and more conveniently it is converted from practical salinity (S).

The composite semipermeable membrane of the present invention is characterized by having a high chemical resistance. With regard to an index for the resistance, it is appropriate to use resistance to each of the aqueous solutions of pH 1 and pH 13 as the index. Because pH 1 is the strongest condition as pH at the time of acid washing in membrane filtration operation and pH 13 is the strongest condition as pH at the time of alkali washing, showing the resistance to each of the aqueous solutions of pH 1 and pH 13 ensures that the membrane is difficult to deteriorate even when the washing with acids or alkalis is carried out.

## EXAMPLES

By way of examples, the present invention will now be described in greater detail below but the present invention is by no means limited thereto. The average membrane thickness and the standard deviation of membrane thickness of polyamide separation functional layers in the comparative examples and examples were measured as follows.

(Average Membrane Thickness and Standard Deviation of Membrane Thickness of Separation Functional Layer)

A composite semipermeable membrane was embedded with PVA and then stained with osmium tetroxide to use as a measurement sample. The obtained sample was imaged by TEM tomography, and the obtained 3D image was analyzed by analysis software. For a TEM tomographic analysis, field emission-type analytical electron microscope JEM2100F manufactured by JEOL Ltd. was used. Using an acquired image at a magnification of 300,000-fold, the shortest distance from a certain point on the external surface of the protuberance structure to the interior surface was defined as membrane thickness; and the analysis was carried out for points of 50 sites per protuberance of the protuberance structure. The above measurement and analysis were carried out for 5 protuberances of the protuberance structure with an accuracy of 0.1 nanometers or better; and the average membrane thickness and the standard deviation of membrane thickness were calculated by the equation 1 and equation 2, respectively, to three significant figures.

Average membrane thickness = Sum of measured membrane thickness / The number of samples ····· (Equation 1)

$$\text{Standard deviation} = \sqrt{\frac{\text{Sum of (Measured membrane thickness - Average membrane thickness)}^2}{\text{The number of samples}}} \quad \cdots\cdots \text{(Equation 2)}$$

The various properties of the composite semipermeable membranes in the comparative examples and examples were determined by carrying out membrane filtration treatment for 3 hours by feeding sodium chloride aqueous solution adjusted to a temperature of 25°C and a pH of 7 to the composite semipermeable membrane at an operating pressure of 1.55 MPa and measuring thereafter the water quality of the permeate water and feed water.

(Salt Removal Rate)

$$\text{Salt removal rate} = 100 \times \{1 - (\text{salt concentration in permeate water / salt concentration in feed water})\} \ (\%)$$

(Membrane Permeate Flux)

From the membrane permeate water volume of the feed water and the area of the composite semipermeable membrane, a permeate water volume per square meter of the membrane area per day, that is, membrane permeate flux ($m^3/m^2$/day) was determined.

(Chemical Resistance)

A composite semipermeable membrane was immersed in a sodium hydroxide aqueous solution with a pH of 13 for one hour and a sulfuric acid aqueous solution with a pH of 1 for one hour each at room temperature, the operation of which cycle was repeated 20 times; and chemical resistance was evaluated based on changes of a salt removal rate before and after the cycles.

$$\text{SP ratio} = (100 - \text{salt removal rate after immersion}) / (100 - \text{salt removal rate before immersion})$$

Note that SP is an abbreviation of Substance Permeation.

(Reference Example 1)

A polyester non-woven fabric (air permeability 0.5 to 1 cc/cm$^2$/sec) was used as a substrate. As a solution for forming a porous support, 15.7% by weight DMF solution of polysulfone was prepared. The polysulfone solution was cast on the substrate with a thickness of 200 $\mu$m at room temperature (25°C), immersed immediately in pure water and allowed to stand for 5 minutes, thereby producing a porous support membrane (thickness 210 to 215 $\mu$m).

(Reference Example 2)

The same polyester non-woven fabric as in Reference Example 1 was used as a substrate. A first polysulfone solution (14.0% by weight DMF solution) and second polysulfone solution (17.0% by weight DMF solution) were prepared. Using a double-slit die coater, the first polysulfone solution and second polysulfone solution were discharged at the same time; and the first polysulfone solution was cast on the substrate and the second polysulfone solution was cast on the first polysulfone solution. The first polysulfone solution was cast so as to have a thickness of 180 $\mu$m and the second polysulfone solution was cast so as to have a thickness of 20 $\mu$m; and immersed immediately in pure water and

allowed to stand for 5 minutes, thereby producing a porous support membrane.

(Example 1)

The porous support membrane obtained in Reference Example 2 was applied with 2.0% by weight aqueous solution of m-PDA and allowed to stand for 2 minutes. Thereafter, nitrogen was blown from an air nozzle to get rid of extra aqueous solution from the surface of the porous support membrane. Subsequently, n-decane solution containing trimesoyl chloride 0.07% by weight was applied thereon such that the surface completely became wet and allowed to stand for 10 seconds. Thereafter, in order to remove an extra solution from the membrane, the membrane was hold vertically for one minute to drain off the solution. The thus obtained membrane was washed with 90°C hot water for 2 minutes to obtain a composite semipermeable membrane. With regard to the obtained composite semipermeable membrane, each of the average membrane thickness of a separation functional layer, the standard deviation of membrane thickness, membrane performance and chemical resistance was as shown in Table 1.

(Example 2)

A composite semipermeable membrane was obtained in the same method as described in Example 1 except that the concentration of the m-PDA aqueous solution was set to 2.2% by weight and the concentration of the trimesoyl chloride solution was set to 0.08% by weight. With regard to the obtained composite semipermeable membrane, each of the average membrane thickness of a separation functional layer, the standard deviation of membrane thickness, membrane performance and chemical resistance was as shown in Table 1.

(Example 3)

A composite semipermeable membrane was obtained in the same method as described in Example 1 except that the concentration of the m-PDA aqueous solution was set to 2.4% by weight and the concentration of the trimesoyl chloride solution was set to 0.08% by weight. With regard to the obtained composite semipermeable membrane, each of the average membrane thickness of a separation functional layer, the standard deviation of membrane thickness, membrane performance and chemical resistance was as shown in Table 1.

(Example 4)

A composite semipermeable membrane was obtained in the same method as described in Example 1 except that the concentration of the m-PDA aqueous solution was set to 2.8% by weight and the concentration of the trimesoyl chloride solution was set to 0.1% by weight. With regard to the obtained composite semipermeable membrane, each of the average membrane thickness of a separation functional layer, the standard deviation of membrane thickness, membrane performance and chemical resistance was as shown in Table 1.

(Example 5)

A composite semipermeable membrane was obtained in the same method as described in Example 1 except that the concentration of the m-PDA aqueous solution was set to 3.0% by weight and the concentration of the trimesoyl chloride solution was set to 0.1% by weight. With regard to the obtained composite semipermeable membrane, each of the average membrane thickness of a separation functional layer, the standard deviation of membrane thickness, membrane performance and chemical resistance was as shown in Table 1.

(Example 6)

A composite semipermeable membrane was obtained in the same method as described in Example 11 except that the concentration of the m-PDA aqueous solution was set to 3.2% by weight and the concentration of the trimesoyl chloride solution was set to 0.1% by weight. With regard to the obtained composite semipermeable membrane, each of the average membrane thickness of a separation functional layer, the standard deviation of membrane thickness, membrane performance and chemical resistance was as shown in Table 1.

(Comparative Example 1)

The porous support membrane obtained in Reference Example 1 was applied with 2.2% by weight aqueous solution of m-PDA and allowed to stand for 2 minutes. Thereafter, nitrogen was blown from an air nozzle to get rid of

extra aqueous solution from the surface of the porous support membrane. Subsequently, n-decane solution containing trimesoyl chloride 0.08% by weight was applied thereon such that the surface completely became wet and allowed to stand for 10 seconds. Thereafter, in order to remove an extra solution from the membrane, the membrane was hold vertically for one minute to drain off the solution. The thus obtained membrane was washed with 90°C hot water for 2 minutes to obtain a composite semipermeable membrane. With regard to the obtained composite semipermeable membrane, each of the average membrane thickness of a separation functional layer, the standard deviation of membrane thickness, membrane performance and chemical resistance was as shown in Table 1.

(Comparative Example 2)

A composite semipermeable membrane was obtained in the same method as described in Comparative Example 1 except that the concentration of the m-PDA aqueous solution was set to 3.0% by weight and the concentration of the trimesoyl chloride solution was set to 0.1% by weight. With regard to the obtained composite semipermeable membrane, each of the average membrane thickness of a separation functional layer, the standard deviation of membrane thickness, membrane performance and chemical resistance was as shown in Table 1.

[Table 1]

[Table 1]

| | Membrane thickness | | Initial performance of membrane | | Chemical resistance |
|---|---|---|---|---|---|
| | Average (nm) | Standard deviation (nm) | Salt removal rate (%) | Membrane permeate flux ($m^3/m^2/day$) | SP ratio |
| Example 1 | 13.8 | 1.78 | 99.5 | 1.41 | 1.27 |
| Example 2 | 14.4 | 1.82 | 99.5 | 1.35 | 1.22 |
| Example 3 | 16.5 | 1.88 | 99.6 | 1.28 | 1.17 |
| Example 4 | 19.3 | 1.91 | 99.6 | 1.14 | 1.16 |
| Example 5 | 21.5 | 1.95 | 99.7 | 0.97 | 1.15 |
| Example 6 | 22.8 | 1.97 | 99.7 | 0.67 | 1.12 |
| Comparative Example 1 | 14.3 | 2.02 | 99.3 | 1.48 | 2.01 |
| Comparative Example 2 | 21.7 | 2.09 | 99.7 | 0.68 | 1.73 |

As read out from Table 1, it was proven that the composite semipermeable membranes of Examples 1 to 6 in which the standard deviation of the membrane thickness of the separation functional layer is 2.00 nm or less have both high water permeation performance and high chemical resistance, as compared with the composite semipermeable membranes of Comparative Examples 1 and 2 in which the standard deviation of the membrane thickness of the separation functional layer is more than 2.00 nm.

Further, among the composite semipermeable membranes in which the standard deviation of the membrane thickness of the separation functional layer is 2.00 nm or less, the composite semipermeable membranes of Examples 2 to 5 in which the average membrane thickness of the separation functional layer is 14 nm or more and 22 nm or less, in particular, the composite semipermeable membranes of Examples 3 and 4 in which the average membrane thickness of the separation functional layer is 16 nm or more and 20 nm or less are prove to have higher water permeation performance and higher chemical resistance, as compared with the composite semipermeable membranes of Examples 1 and 6.

INDUSTRIAL APPLICABILITY

The composite semipermeable membrane according to the present invention can be suitably used particularly in desalination of brackish water and sea water.

## Claims

1. A composite semipermeable membrane in which a polyamide separation functional layer is formed on a porous support membrane comprising a substrate and a porous support, wherein a standard deviation of a membrane thickness of the separation functional layer is 2.00 nm or less, wherein the substrate comprises fibers, and wherein said porous support has a multilayered structure,
wherein an average membrane thickness of said separation functional layer is 14 nm or more and 22 nm or less,
wherein the porous support having a multilayered structure has at least two layers of polysulfone with a first layer that contacts with a substrate and a second layer that contacts with the polyamide separation functional layer,
wherein the first layer has fine pores of a pore size of 0.1 μm or more and 1 μm or less,
wherein the second layer has fine pores of a pore size of 1 nm or more and 10 nm or less, and
wherein the pore size and the membrane thickness is determined as described in the description using an ultra-high resolution field-emission scanning electron microscope.

2. A spiral composite semipermeable membrane element in which said composite semipermeable membrane according to claim 1, a feed spacer and a permeate spacer are wound around a cylindrical collecting pipe provided with a large number of pores by drilling.

3. A method of producing the composite semipermeable membrane according to claim 1 or 2, in which a polyamide separation functional layer is formed on a porous support membrane comprising a substrate and a porous support, the method comprising the steps of forming said porous support by applying polymer solution A forming a first layer and polymer solution B forming a second layer on said substrate at the same time and then immersing said substrate in a non-solvent for the polymer to solidify polymer solution A and polymer solution B, and subsequently forming the separation functional layer on said porous support by interfacial polycondensation; wherein said first layer is formed so as to contact with said substrate; said second layer is formed so as to contact with said separation functional layer;
wherein the polymer solution A and the polymer solution B are polysulfone solutions,
wherein the concentration of polysulfone in the polymer solution A is 12% by weight or more and 18% by weight or less, and
wherein the concentration of polysulfone in the polymer solution B is 14% by weight or more and 25% by weight or less, and a polymer concentration of the polymer solution B is greater than a polymer concentration of the polymer solution A.

## Patentansprüche

1. Semipermeable Verbundmembran, in der eine Polyamid-Trennfunktionsschicht auf einer porösen Trägermembran gebildet ist, die ein Substrat und einen porösen Träger aufweist, wobei eine Standardabweichung einer Membrandicke der Trennfunktionsschicht 2,00 nm oder weniger beträgt, wobei das Substrat Fasern aufweist, und wobei der poröse Träger eine mehrschichtige Struktur hat,
wobei eine durchschnittliche Membrandicke der Trennfunktionsschicht 14 nm oder mehr und 22 nm oder weniger beträgt,
wobei der poröse Träger mit einer mehrschichtigen Struktur mindestens zwei Polysulfonschichten mit einer ersten Schicht, die mit einem Substrat in Kontakt steht, und einer zweiten Schicht, die mit der Polyamid-Trennfunktionsschicht in Kontakt steht, aufweist,
wobei die erste Schicht feine Poren mit einer Porengröße von 0,1 μm oder mehr und 1 μm oder weniger hat,
wobei die zweite Schicht feine Poren mit einer Porengröße von 1 nm oder mehr und 10 nm oder weniger hat, und
wobei die Porengröße und die Membrandicke wie in der Beschreibung beschrieben unter Verwendung eines Feldemissions-Rasterelektronenmikroskops mit ultrahoher Auflösung bestimmt werden.

2. Spiralförmiges semipermeables Verbundmembranelement, in dem die semipermeable Verbundmembran nach Anspruch 1, ein Feed-Spacer und ein Permeat-Spacer um ein zylindrisches Sammelrohr gewickelt sind, das durch Bohren mit einer großen Anzahl von Poren versehen ist.

3. Verfahren zur Herstellung der semipermeablen Verbundmembran nach Anspruch 1 oder 2, in dem eine Polyamid-Trennfunktionsschicht auf einer porösen Trägermembran gebildet wird, die ein Substrat und einen porösen Träger aufweist, wobei das Verfahren die Schritte des Bildens des porösen Trägers durch gleichzeitiges Aufbringen einer Polymerlösung A, die eine erste Schicht bildet, und einer Polymerlösung B, die eine zweite Schicht auf dem Substrat

bildet, und dann Eintauchen des Substrats in ein Nichtlösungsmittel für das Polymer, um Polymerlösung A und Polymerlösung B zu verfestigen, und des anschließenden Bildens der Trennfunktionsschicht auf dem porösen Träger durch Grenzflächenpolykondensation umfasst; wobei die erste Schicht so ausgebildet ist, dass sie mit dem Substrat in Kontakt steht; wobei die zweite Schicht so ausgebildet ist, dass sie mit der Trennfunktionsschicht in Kontakt steht;
wobei die Polymerlösung A und die Polymerlösung B Polysulfonlösungen sind,
wobei die Konzentration von Polysulfon in der Polymerlösung A 12 Gew.-% oder mehr und 18 Gew.-% oder weniger beträgt, und
wobei die Konzentration von Polysulfon in der Polymerlösung B 14 Gew.-% oder mehr und 25 Gew.-% oder weniger beträgt, und eine Polymerkonzentration der Polymerlösung B größer ist als eine Polymerkonzentration der Polymerlösung A.

**Revendications**

1. Membrane semi-perméable composite dans laquelle une couche fonctionnelle de séparation en polyamide est formée sur une membrane à support poreux comprenant un substrat et un support poreux, dans laquelle une déviation standard d'une épaisseur de membrane de la couche fonctionnelle de séparation est inférieure ou égale à 2,00 nm, dans laquelle le substrat comprend des fibres et dans laquelle ledit support poreux a une structure multicouche,
dans laquelle une épaisseur moyenne de membrane de ladite couche fonctionnelle de séparation est supérieure ou égale à 14 nm et inférieure ou égale à 22 nm,
dans laquelle le support poreux ayant une structure multicouche a au moins deux couches en polysulfone avec une première couche qui est en contact avec un substrat et une deuxième couche qui est en contact avec la couche fonctionnelle de séparation en polyamide,
dans laquelle la première couche a des pores fins ayant une taille de pores supérieure ou égale à 0,1 μm et inférieure ou égale à 1 μm,
dans laquelle la deuxième couche a des pores fins ayant une taille de pores supérieure ou égale à 1 nm et inférieure ou égale à 10 nm, et
dans laquelle la taille de pores et l'épaisseur de membrane sont déterminées comme décrit dans la description en utilisant un microscope électronique à balayage à émission de champ à ultra-haute résolution.

2. Élément de membrane semi-perméable composite en spirale dans lequel ladite membrane semi-perméable composite selon la revendication 1, un élément d'espacement d'alimentation et un élément d'espacement de perméat sont enroulés autour d'un tuyau de collecte cylindrique muni d'un grand nombre de pores par forage.

3. Procédé de fabrication de la membrane semi-perméable composite selon la revendication 1 ou 2, dans lequel une couche fonctionnelle de séparation en polyamide est formée sur une membrane à support poreux comprenant un substrat et un support poreux, le procédé comprenant les étapes consistant à former ledit support poreux par application d'une solution de polymère A formant une première couche et d'une solution de polymère B formant une deuxième couche sur ledit substrat en même temps, puis à immerger ledit substrat dans un liquide non-solvant pour le polymère pour solidifier la solution de polymère A et la solution de polymère B, et
à former ensuite la couche fonctionnelle de séparation sur ledit support poreux par polycondensation interfaciale ; où ladite première couche est formée de manière à entrer en contact avec ledit substrat ; ladite deuxième couche est formée de manière à entrer en contact avec ladite couche fonctionnelle de séparation ;
dans lequel la solution de polymère A et la solution de polymère B sont des solutions de polysulfone,
dans lequel la concentration de polysulfone dans la solution de polymère A est supérieure ou égale à 12% en poids et inférieure ou égale à 18% en poids, et
dans lequel la concentration de polysulfone dans la solution de polymère B est supérieure ou égale à 14% en poids et inférieure ou égale à 25% en poids, et une concentration de polymère de la solution de polymère B est supérieure à une concentration de polymère de la solution de polymère A.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1808220 A
- JP 2000176263 B
- GB 2064367 A
- EP 1775016 A
- JP 2007090192 A
- JP 9019630 A
- JP 2006102624 A
- JP 2010234284 A
- JP H0278428 B